(19) Europäisches Patentamt
European Patent Office
Office européen des brevets

(11) Publication number: **0 291 824 B1**

(12) **EUROPEAN PATENT SPECIFICATION**

(45) Date of publication of patent specification: **13.04.94**

(51) Int. Cl.$^5$: **C08F 4/22**, C08F 4/62, C08F 10/02

(21) Application number: **88107524.6**

(22) Date of filing: **10.05.88**

The file contains technical information submitted after the application was filed and not included in this specification

(54) **Improved chromium catalyst compositions.**

(30) Priority: **20.05.87 US 52654**

(43) Date of publication of application:
**23.11.88 Bulletin 88/47**

(45) Publication of the grant of the patent:
**13.04.94 Bulletin 94/15**

(84) Designated Contracting States:
**DE ES FR GB IT NL SE**

(56) References cited:
**BE-A- 789 870**
**FR-A- 2 303 812**
**US-A- 4 025 707**
**US-A- 4 049 896**

**ASTM D 2561-70 (Reapproved 1989)**

(73) Proprietor: **OUANTUM CHEMICAL CORPORATION (a Virginia corp.)**
**99 Park Avenue**
**New York, NY 10016(US)**

(72) Inventor: **Rekers, Louis J.**
**50 W. Charlotte Avenue**
**Wyoming Ohio(US)**
Inventor: **Katzen, Stanley J.**
**7605 Elbrook Avenue**
**Chincinnati Ohio(US)**

(74) Representative: **Patentanwälte Grünecker, Kinkeldey, Stockmair & Partner**
**Maximilianstrasse 58**
**D-80538 München (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a catalyst composition that can be used in a process for the production of polyethylene having a density greater than 0.957 and ESCR greater than 8h by particle form polymerization.

In the selection and production of resins for the manufacture of blow molded goods, more so than with any other fabrication method, a careful balance must be struck between the physical properties of the solid resin and the processing characteristics of the resin melt if efficient production of durable molded articles is to be achieved. While many resins have superior physical properties, they do not have acceptable rheological (viscoelastic) properties under conditions of flow and shear such as are encountered during blow molding. Conversely, other resins which exhibit satisfactory viscoelastic behavior are deficient in one or more essential physical characteristics. For this reason there is a continuing effort to develop resins which have an optimal balance of physical and rheological properties. This is especially true with polyethylene resins used for the manufacture of blow molded bottles.

Improved processability of polyolefin resins, i.e., improved flow properties and shear response, has been obtained by increasing the molecular weight distribution of the polymer. This can be accomplished by blending separately prepared polymers of different molecular weights or by utilizing catalyst systems capable of directly producing polymers having broadened molecular weight distributions. US-A-4,025,707, for example, discloses the preparation of ethylene homopolymers and copolymers of broadened molecular weight distribution utilizing a mixed catalyst comprising several portions of the same or different chromium components and metal promoted variations thereof wherein each portion is activated at a different temperature. US-A-4,560,733 discloses magnesium- and titanium-containing catalyst components for a similar purpose which are prepared by milling a blend of at least two different silica-containing components having different melt index potentials.

While it has been possible to improve processing characteristics in this manner, any processing advantage has heretofore been offset in large part by a corresponding decrease in one or more essential physical properties. For example, while the products obtained in accordance with US-A-4,025,707 have good die swell characteristics and acceptable environmental stress cracking resistance and flow properties, polymer densities are too low to provide the necessary stiffness for blown bottles. On the other hand, polymers such as those produced using the catalysts of US-A-4,560,733 have sufficiently high densities (0.960 and higher) but typically are deficient in their resistance to environmental stress cracking.

In addition to having acceptable processing characteristics, the resin must also have sufficiently high density and high resistance to environmental stress cracking in order to produce useful blown bottles. A density of at least 0.957 is necessary to obtain the high degree of stiffness required by molders. It is considered even more desirable for the resin to have a density of 0.958 to 0.961. Stiffness imparts strength to bottles and also makes thinner wall constructions possible. More units per pound of resin can thus be obtained which represents an economic advantage to the processor. The resin must also exhibit resistance to cracking under environmental stress, that is, while being stretched or bent in several directions at once.

While stiffness increases with density as noted above, an inverse relationship exists between density and resistance to environmental stress cracking, i.e., as density is increased, resistance to environmental stress cracking is reduced. These relationships assume that the melt index of the resins are the same or essentially the same. A balance must therefore be struck between the density, i.e., stiffness, of the resin and the resistance of the resin to environmental stress cracking. It is therefore the object underlying the present invention to provide a novel catalyst composition for producing polyethylene resins having an optimal balance of rheological and physical properties, in particular for producing high density resins having high resistance to stress cracking and which are useful for the manufacture of blown bottles.

According to the present invention this is attained with a catalyst composition characterized by a first and second heat-activated silica-supported catalyst component, said catalyst components being present at a weight ratio of 3:1 to 1:3 and containing from 0.5 to 1.25 weight percent chromium with one of said catalyst components also containing from 0.5 to 6 weight percent aluminium, the silica supports of said first and second catalyst components differing in pore volumes by at least 0.3 $cm^3/g$, the silica support of said first catalyst component having a pore volume greater than 2.0 $cm^3/g$ and the silica support of said second catalyst component having a pore volume from 1.5 to 1.9 $cm^3/g$, and the heat-activation being carried out at a temperature below the decomposition temperature of the silica supports.

The catalyst composition of the present invention can be used in a process for producing polyethylene having a density greater than 0.957 and ESCR greater than 8h by particle form polymerization characterized by conducting the polymerization in the presence of the catalyst composition of any of claims 1 to 15 in an organic medium in which the polyethylene is insoluble and from which it is readily recoverable in the form of said particles.

Preferred embodiments of the present invention are set forth in the dependent claims.

The individual catalyst components may be heat activated or the components may be combined and the resulting mixture heat activated. Reducing agents, most notably trialkyl boranes, can advantageously be employed with the mixed catalyst if desired.

It is particularly advantageous if the first catalyst component has 0.5 to 1.2 weight percent chromium and 2 to 4.5 weight percent aluminum on the silica support of pore volume greater than 2.0 ml/g and the second catalyst component has 0.75 to 1.25 weight percent chromium on a microspheroidal silica support. Silica supports having pore volumes from 2.1 ml/g to 2.9 ml/g are especially useful for preparation of the first catalyst component whereas microspheroidal silica supports having pore volumes of 1.6 ml/g to 1.8 ml/g are most advantageous for the second catalyst component. The first catalyst component is preferably obtained by depositing an organophosphoryl chromium compound and aluminum alkoxide compound on the high pore volume silica and the second catalyst component most preferably is obtained by depositing chromium acetate on the microspheroidal silica.

In accordance with the present invention, polyethylene resins having good processing characteristics, high density and high resistance to environmental stress cracking are obtained using mixed chromium catalysts obtained by judicious utilization of known supported chromium-containing catalyst components. Whereas the individual catalyst components are known, it has unexpectedly been found that by combining these catalysts in specific ratios that the resulting mixed catalysts produce resins which, in addition to having excellent processing characteristics by virtue of a broadened molecular weight distribution, also have high densities and high resistance to environmental stress cracking. This balance of desirable processability with both high density and high resistance to stress cracking makes the resins highly useful in blow molding applications and particularly for the production of blown bottles.

Polyethylene resins having densities of at least 0.957, high environmental stress cracking resistance (ESCR), and acceptable flow properties and shear response are obtained in the particle form polymerization process using the present improved catalyst compositions which are mixtures of first and second chromium-containing silica-supported catalyst components wherein the silica supports for said catalyst components differ in pore volumes by at least 0.3 ml/g and one of the catalyst components also contains aluminum. More particularly, resins produced in accordance with this process have densities from 0.958 to 0.961 and ESCR values greater than 8 h and, more preferably, greater than 10 h. ESCR values referred to herein are bottle ESCR F50 values as determined in accordance with ASTM D-2561, Procedure C (modified).

In addition to having densities and bottle ESCRs within the above-specified ranges, the resins also typically have melt indexes (pellet) in the range 0.2 to 0.4 and melt index ratios (MIRs) in the range 80 to 125. MIR is generally considered to be an approximation of molecular weight distribution and is the ratio between the high load melt index (HLMI) determined in accordance with ASTM D1238-57T, condition F, and the MI determined in accordance with ASTM D1238-57T, condition E. In general, with resins of comparable MI, polymers with broader molecular weight distributions have higher MIRs and better flow properties than their lower MIR counterparts.

While it is generally recognized that flow properties can be improved by using two or more silica supports for the catalyst and that the melt index is affected by the pore volume of the silica, it is unexpected that by the use of mixed catalysts based on two known catalyst components resins having the above-described highly desirable balance of rheological and physical properties can be obtained. Heretofore, any processing advantage which has been obtained has been accompanied by a corresponding undesirable decrease in density and/or ESCR.

The catalyst composition of the present invention is a mixture of two discreet supported catalysts present in specific ratios. Both catalyst components employed for the improved mixed catalyst compositions of the invention have chromium on a silica support. Additionally, one of the catalyst components also has aluminum deposited thereon. The silica supports utilized for the two catalyst components differ in pore volumes by at least 0.3 ml/g. The weight ratio of the first and second supported catalyst component ranges from 3:1 to 1:3 and, more preferably, from 2:1 to 1:2.

The silica support employed for the first catalyst has a pore volume greater than 2.0 ml/g. These supports, generally referred to as high pore volume silica supports, are well known silica xerogels obtained in accordance with known procedures such as those described in US-A-3,652,214, 3,652,215 and 3,652,216. Especially useful high pore volume silicas for the catalyst composition of this invention have pore volumes from 2.1 ml/g to 2.9 ml/g with a major portion of the pore volume being provided by pores having diameters in the range 30 nm to 60 nm (300Å to 600Å). These high pore volume materials have surface areas in the range 200 to 500 $m^2/g$. Silica supports employed for the second catalyst component are microspheroidal silicas having pore volumes from 1.5 ml/g to 1.9 ml/g. Silica xerogels of this type are also obtained by

conventional methods known to the art such as described in US-A-3,453,077, and are commercially available. Microspheroidal silica of pore volume 1.6 ml/g to 1.8 ml/g is especially useful for preparation of the second catalyst component. While it is not necessary, either or both of the silica supports can be calcined at temperatures ranging from 204°C (400°F) to 982°C (1800°F) prior to having the metal deposited thereon. In one particularly useful embodiment of the invention the high pore volume silica support of the first catalyst component is calcined before deposition of the chromium and aluminum compounds thereon.

Known chromium-containing compounds capable of reacting with the surface hydroxyl groups of the silica supports can be utilized to deposit the chromium thereon. Examples of such compounds include chromium nitrate, chromium trioxide, chromate esters such as chromium acetate, chromium acetylacetonate and t-butyl chromate, silyl chromate esters and phosphorus-containing chromate esters.

Known aluminum-containing compounds capable of reacting with the surface hydroxyl group of the silica supports can be employed to deposit the aluminum thereon. Examples of such aluminum compounds include aluminum alkoxides, such as aluminum sec-butoxide, aluminum ethoxide, aluminum isopropoxide; alkyl aluminum alkoxides, such as, e.g., ethyl aluminum ethoxide, methyl aluminum propoxide, diethyl aluminum ethoxide and diisobutyl aluminum ethoxide,; alkyl aluminum compounds, such as, e.g., triethyl aluminum and triisobutyl aluminum; alkyl or aryl aluminum halides, such as diethyl aluminum chloride; aryl aluminum compounds, such as triphenyl aluminum; and aryloxy aluminum compounds, such as aluminum phenoxide. While the aluminum may be deposited on either the first or second catalyst component, it is preferably associated with the first catalyst component and supported on the high pore volume silica.

The first and second catalyst component are obtained by depositing the chromium-containing compound and aluminum-containing compound on the silica support in accordance with conventional known procedures, e.g., vapor coating or deposition from inert organic solvents. Organic solvents which can be employed for this purpose typically include hydrocarbons and their halogenated derivatives. Dichloromethane has been found to be a particularly effective solvent for depositing chromium and aluminum compounds on the supports. The same or different chromium-containing compounds may be used for preparation of the first and second catalyst component. When preparing the catalyst component containing both chromium and aluminum, the chromium compound and aluminum compound may be deposited individually or together. If separate steps are employed, the order of depositing the chromium compound and the aluminum compound can be varied. Furthermore, after the first deposition the support having the metal deposited thereon may be heat activated before proceeding to deposit the second metal compound.

The first and second catalyst component contain from 0.5 to 1.25 weight percent chromium. However, in an especially useful embodiment of the invention, the first catalyst component contains from 0.5 to 1.2 weight percent chromium and the second catalyst component contains from 0.75 to 1.25 weight percent chromium. Aluminum is present at a 0.5 to 6 weight percent level. It is particularly advantageous when the aluminum is associated with the first high pore volume catalyst component and is present in an amount from 2 to 4.5 weight percent.

The first and second catalyst component are heat activated by heating at a temperature below the decomposition temperature of the support material in a non-reducing atmosphere. The heat activation may be carried out before the first and second catalyst component are combined or after the first and second catalyst component have been combined. Temperatures generally employed for heat activation range from 232°C (450°F) up to 927°C (1700°F). Higher activation temperatures can be utilized provided the decomposition temperature of the support material is not exceeded. When the first and second catalyst component are combined and co-activated by heating the mixture of the catalyst, temperatures from about 510°C (950°F) to 816°C (1500°F) are preferably used. When the first and second catalyst component are separately heat activated, temperatures from 510°C (950°F) to 899°C (1650°F) are most advantageously employed. In the latter situation, the first and second catalyst component may be heat activated at different temperatures within the above-recited range. Also with the catalyst containing both the chromium and aluminum, multiple heat activation steps may be carried out, i.e., after the first metal compound is deposited on the support and before proceeding with deposition of the second metal compound a heat activation operation may be carried out. Similarly, after deposition of the second metal compound, a second heat activation procedure may be conducted or the support having the metal deposited thereon may be combined with the other catalyst component and this mixture heat activated.

The heat activation is carried out in a non-reducing atmosphere, preferably, in an oxygen-containing atmosphere. The time required for heat activation will vary but generally ranges from 30 min up to 24 h and, more preferably, from 2 to 12 h. If the catalyst components are separately heat activated, temperatures and times of activation may differ. The non-reducing atmosphere, which is preferably air or other oxygen-containing gas, should be essentially dry. When air is used, it is preferably dehumidified to less than 3 ppm

water.

The mixed catalysts according to the present invention are preferably used in combination with metallic and/or non-metallic reducing agents. Examples of metallic reducing agents include trialkyl aluminums, such as triethyl aluminum and triisobutyl aluminum, alkyl aluminum halides, alkyl aluminum alkoxides, dialkyl zincs, dialkyl magnesiums, and borohydrides including those of the alkali metals, especially sodium, lithium and potassium, and aluminum. Non-metal reducing agents include alkyl boranes such as triethyl borane, triisobutyl borane, and trimethyl borane and hydrides of boron such as diborane, pentaborane, hexaborane and decaborane. The mixed catalyst may be combined with the metallic or non-metallic reducing agent prior to being fed to the polymerization vessel or the mixed catalyst and reducing agent may be separately fed to the polymerization reactor. The molar ratio of the metal or non-metal of the reducing agent to chromium can range from 0.01:1 to 2:1.

In one embodiment of the invention wherein the catalyst composition when used in the preparation of polyethylene can lead to particularly useful polyethylene resins having a good balance of physical and rheological properties useful for the manufacture of blow molded bottles are produced, the first catalyst component contains from 0.5 to 1.2 weight percent chromium, obtained by deposition of an organophosphoryl chromium compound, and 2 to 4.5 weight percent aluminum, obtained by deposition of an aluminum alkoxide compound, on a high pore volume silica support having a pore volume from 2.1 ml/g to 2.9 ml/g. It is especially advantageous if the high pore volume silica support is calcined at a temperature from 649 °C (1200 °F) to 927 °C (1700 °F) prior to deposition of the chromium and aluminum compounds. Chromium/aluminum-containing catalysts of this type are known and described in US-A-3,984,351.

In general, the first catalyst component is obtained by depositing an organophosphoryl chromium compound which is the reaction product of chromium trioxide and an organophosphorus compound of the formula

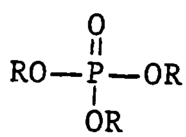

or

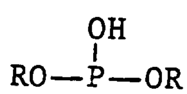

wherein at least one of the R groups is a hydrocarbon radical selected from alkyl, aryl, aralkyl, or alkaryl. Any R groups which are not hydrocarbon radicals are hydrogen. Preferred organophosphorus compounds are trialkyl phosphates such as triethyl phosphate. The aluminum alkoxide compounds correspond to the formula

$Al(OR)_3$

where R is an alkyl having from 1 to 8 carbon atoms or aryl, aralkyl, or alkaryl having from 6 to 8 carbon atoms. Aluminum sec-butoxide, aluminum isopropoxide, aluminum ethoxide, and aluminum phenoxide are representative aluminum alkoxides and aluminum sec-butoxide is particularly advantageous.

Best results are obtained when the above-described first catalyst component is used in conjunction with a second catalyst component containing from 0.75 to 1.25 weight percent chromium, obtained by deposition of a chromate ester, on a microspheroidal silica support having a pore volume from 1.6 ml/g to 1.8 ml/g. Chromium acetate is a particularly useful chromate ester for this purpose.

Synthetic microspheroidal (amorphous) silica xerogels impregnated with chromium acetate useful as the second catalyst component are commercially available. It is even more desirable if a trialkyl borane reducing agent is employed in conjunction with the above-described preferred first and second catalyst components and when the molar ratio of the boron to chromium ranges from 0.1:1 to 1.5:1.

Utilizing the above-described preferred mixed catalysts, it is possible to produce easily processable and highly useful polyethylene resins having high density and high resistance to environmental stress cracking. For example, polyethylene resins having densities in the range 0.958 to 0.961 and ESCRs greater than 10 h with melt indexes from 0.2 to 0.4 and melt index ratios from 80 to 125 are obtained thereby. It is especially desirable that these highly desirable and preferred polyethylene resin products can be obtained using mixed catalysts wherein it is not necessary to heat activate the first and second catalyst component individually. It is extremely useful and beneficial from a commercial point of view that mixed catalysts which are heat activated after the first and second catalyst component are combined produce these highly desirable results since one of the steps in the catalyst preparation procedure can thereby be eliminated. While the polymerization is facilitated by the use of a reducing agent with the mixed catalyst compositions,

it has further quite unexpectedly been discovered that, when utilizing the preferred mixed catalysts, polyethylene resins having the above-defined highly desirable properties can nevertheless be produced.

The mixed catalysts are utilized for the polymerization of ethylene in conventional particle form (slurry) processes. Such procedures are well known and are described in the prior art, e.g., US-A-3,644,323. In general these polymerizations are carried out in a liquid organic medium at a temperature from 66 °C (150 °F) to 110 °C (230 °F). The catalyst is suspended in the organic medium and the reaction is conducted at a pressure sufficient to maintain the organic diluent and at least a portion of the olefin in the liquid phase. Weight percent ethylene in the reactor is generally maintained from 1.5 up to 7. Hydrogen is generally added to the polymerization reaction. The molar ratio of hydrogen to ethylene in the reactor is generally maintained between 0.25 and 1.0. While not necessary for polymerization, a reducing agent is generally included with the catalyst.

The organic medium employed for the polymerization is generally a paraffinic and/or cycloparaffinic material such as, e.g., propane, butane, isobutane, pentane, isopentane, cyclohexane and methylcyclohexane. The medium is chosen so that under the conditions employed the polymer is insoluble in the medium and is readily recoverable in the form of solid particles. Isobutane is a particularly advantageous organic medium for the purpose of these polymerizations. Pressures typically range from about 0.690 to 5.52 $kN/m^2$ (100 to 800 psig) and catalyst concentrations can range from 0.001 to 1 percent, based on the total weight of the reactor contents. The polymerizations can be conducted as batch or continuous or semi-continuous operations.

The following examples illustrate the mixed catalysts of the present invention more fully and describe their utilization in the particle form process for the preparation of readily processable polyethylene resins having high densities and high resistance to environmental stress cracking.

## EXAMPLE I

A mixed catalyst was prepared in accordance with the present invention and utilized for the polymerization of ethylene. The catalyst consisted of a mixture of a supported chromium/aluminum catalyst prepared in accordance with the procedure of US-A-3,984,351, identified as Component A, and a supported chromium catalyst obtained from commercial sources, identified as Component B. Component A was prepared by calcining a high pore volume silica support at 899 °C (1650 °F) for 6 h and thereafter impregnating first with the reaction product of $CrO_3$ and triethyl phosphate and then with aluminum sec-butoxide. The impregnations were made by deposition from dichloromethane solutions. The impregnated catalyst was then activated by placing it in a cylindrical container and fluidizing with dry air at 6.1 cm (0.2 feet)/min lineal velocity while heating at 577 °C (1070 °F) for 6 h. The resulting heat-activated chromium/aluminum catalyst had a pore volume of 2.3 ml/g and contained 1.0 percent chromium and 3.7 percent aluminum. Component B was a commercially obtained microspheroidal silica xerogel impregnated with chromium acetate which was activated by fluidizing with dry air at 6.1 cm (0.2 feet)/min lineal velocity and heating at 538 °C (1000 °F) for 6 h. The resulting heat-activated chromium catalyst had a pore volume of 1.7 ml/g and contained 1.0 percent chromium. Catalyst Components A and B were blended at a weight ratio of 3:1 to obtain the mixed catalyst.

The polymerization was carried out in a jacketed loop-type reactor provided with an agitator to cause circulation within the loop and create highly turbulent flow. Isobutane was employed as the hydrocarbon reaction medium. Means were provided to continuously feed isobutane, ethylene, a slurry of the mixed catalyst in isobutane, a solution of triethyl boron in isobutane to the reactor, and hydrogen and for removing a mixture of the polymer, unreacted monomer, and diluent at a controlled rate. Polymerization details were as follows:

| | |
|---|---|
| Temperature (°F) °C | (213) 101 |
| Catalyst Concentration (g/kg isobutane) | 0.38 |
| Ethylene in Reactor (Wt. %) | 3.19 |
| $H_2$/Ethylene Molar Ratio | 0.49 |
| Boron/Chromium Molar Ratio | 0.24 |

The polyethylene produced was a free-flowing powder after removal of ethylene and isobutane and had a density of 0.9599 with an ESCR of 10.1. The resin had an MI of 0.26 and MIR of 119 and was readily processable using conventional blow molding equipment for the fabrication of blown bottles.

The above polymerization was repeated except that the conditions were varied as follows:

| | |
|---|---|
| Temperature (°F) °C | (212) 100 |
| Catalyst Concentration (g/kg isobutane) | 0.40 |
| Ethylene in Reactor (Wt. %) | 2.97 |
| $H_2$/Ethylene Molar Ratio | 0.49 |
| Boron/Chromium Molar Ratio | 0.25 |

The resulting polyethylene resin had a density of 0.9595, ESCR of 10.5, MI 0.20, and MIR of 122.

A useful high density resin was obtained even when the mixed catalyst was employed without triethyl borane reducing agent. For example, when ethylene was polymerized at 101°C (214°F) using a catalyst concentration of 0.73 g/kg isobutane with 3.81 weight percent ethylene and $H_2$/ethylene molar ratio of 0.35, a resin having a density of 0.9601, ESCR of 8.9, MI of 0.26, and MIR of 130 was obtained. While the environmental stress crack resistance of the resin was somewhat lower than that obtained above when triethyl borane is used, it nevertheless is considered to be within acceptable limits.

EXAMPLE II

To further demonstrate the ability to obtain high density resins having increased environmental stress crack resistance, a mixed catalyst was prepared by blending Components A and B of Example I at a weight ratio of 1:1. The catalyst was employed for the polymerization of ethylene in accordance with the procedure of Example I under the following conditions:

| | |
|---|---|
| Temperature (°F) °C | (212) 100 |
| Catalyst Concentration (g/kg isobutane) | 0.41 |
| Ethylene in Reactor (Wt. %) | 2.17 |
| Hydrogen/Ethylene Molar Ratio | 0.89 |

The resulting polyethylene resin had a density of 0.9601 and ESCR of 11.4. The MI and MIR of the resin were 0.26 and 110, respectively.

When the polymerization was repeated except that the weight percent ethylene was increased to 2.82 and the hydrogen/ethylene molar ratio adjusted to 0.69, a resin of density 0.9606, ESCR of 10.1, MI of 0.24, and MIR of 118 was obtained.

EXAMPLE III

A chromium/aluminum-containing catalyst component, identified as Component C, was prepared as described for Component A in Example I except that the high pore volume silica support was not calcined prior to deposition of the chromium and aluminum compounds. After deposition of the chromium and aluminum compounds, Component C was air-dried and combined at a 1:1 weight ratio with a commercial chromium acetate impregnated microspheroidal silica xerogel (1.0% Cr; pore volume 1.7 ml/g). The combined catalyst components were then co-activated by fluidizing the mixture with dry air at 6.1 cm (0.2 feet)/min lineal velocity and heating at 593 °C (1100 °F) for 6 h. The resulting heat-activated mixed catalyst was employed for the polymerization of ethylene. Polymerization conditions and properties of the resulting resin-produced thereby were as follows:

| | |
|---|---|
| Temperature (°F) °C | (218) 103 |
| Catalyst Concentration (g/kg isobutane) | 0.40 |
| Ethylene in Reactor (Wt. %) | 4.0 |
| $H_2$/Ethylene Molar Ratio | 0.28 |
| Boron/Chromium Molar Ratio | 0.14 |

| | |
|---|---|
| Density | 0.9592 |
| ESCR | 12 |
| MI | 0.23 |
| MIR | 113 |

It is evident from the foregoing data that the product produced in accordance with the above-defined polymerization conditions has a superior balance of physical and rheological properties rendering it useful

for blow molding applications. When the above-defined catalyst components are individually employed for the polymerization of ethylene under comparable polymerization conditions, resins having the desired balance of physical and rheological properties are not produced. For example, when high density resins having acceptable rheological properties are obtained, the stress crack resistance of the polymers is deficient.

**Claims**

1. A catalyst composition **characterized by** a first and second heat-activated silica-supported catalyst component, said catalyst components being present at a weight ratio of 3:1 to 1:3 and containing from 0.5 to 1.25 weight percent chromium with one of said catalyst components also containing from 0.5 to 6 weight percent aluminium, the silica supports of said first and second catalyst components differing in pore volumes by at least 0.3 $cm^3/g$, the silica support of said first catalyst component having a pore volume greater than 2.0 $cm^3/g$ and the silica support of said second catalyst component having a pore volume from 1.5 to 1.9 $cm^3/g$, and the heat-activation being carried out at a temperature below the decomposition temperature of the silica supports in a non-reducing atmosphere.

2. The catalyst composition of claim 1 wherein a metallic or non-metallic reducing agent is employed with said first and second catalyst components and the molar ratio of the metal or non-metal of said reducing agent to chromium ranges from 0.01:1 to 2:1.

3. The catalyst composition of claim 2 wherein the metallic or non-metallic reducing agent is trialkyl aluminiums, alkyl aluminium halides, alkyl aluminium alkoxides, dialkyl zincs, dialkyl magnesiums, alkali metal borohydrides, aluminium borohydrides, alkyl boranes, or boron hydrides.

4. The catalyst composition of claim 2 or 3 wherein the difference in pore volumes of the silica of said first and second catalyst components ranges from 0.3 to 1.2 $cm^3/g$.

5. The catalyst composition of any of claims 2 to 4 wherein said first and second catalyst components are present in a weight ratio from 2:1 to 1:2, the reducing agent is a trialkyl borane, and the molar ratio of boron to chromium ranges from 0.1:1 to 1.5:1.

6. The catalyst composition of any of claims 1 to 5 wherein the first catalyst component contains from 0.5 to 1.2 weight percent chromium and 2 to 4.5 weight percent aluminum on the silica support and the major portion of the pore volume of the silica support of the first catalyst component is provided by pores having diameters of 30 nm to 60 nm (300Å to 600Å).

7. The catalyst composition of claim 6 wherein the first catalyst component is obtained by the deposition of an organophosphoryl chromium compound and aluminium alkoxide compound on a silica support having a pore volume from 2.1 $cm^3/g$ to 2.9 $cm^3/g$.

8. The catalyst composition of claim 7 wherein the silica support of said first catalyst component is calcined at a temperature from 649 °C (1200 °F) to 927 °C (1700 °F) before deposition of the chromium and aluminium compounds.

9. The catalyst composition of claim 7 wherein the organophosphoryl chromium compound is the reaction product of chromium trioxide and triethyl phosphate and the aluminium alkoxide compound is aluminium sec-butoxide.

10. The catalyst composition of any of claims 7 to 9 wherein the second catalyst component contains from 0.75 to 1.25 weight percent chromium on the microspheroidal silica support.

11. The catalyst composition of claim 10 wherein the second catalyst component is obtained by the deposition of chromium acetate on a microspheroidal silica support having a pore volume of 1.6 $cm^3/g$ to 1.8 $cm^3/g$.

12. The catalyst composition of any of claims 1 to 11 wherein the first and second catalyst components are separately heat activated by heating in a non-reducing atmosphere at a temperature from 510 °C

(950 ° F) to 899 ° C (1650 ° F) for a period of 2 to 12 h.

**13.** The catalyst composition of any of claims 1 to 11 wherein the first and second catalyst components are combined and coactivated by heating a mixture of the catalyst components in a non-reducing atmosphere at a temperature from 510 ° C (950 ° F) to 816 ° C (1500 ° F) for a period of 2 to 12 h.

**14.** The catalyst composition of any of claims 5 to 13 wherein the trialkyl borane is triethyl borane employed with the first and second catalyst components.

**15.** The catalyst composition of any of claims 7 to 14 wherein the silica support of the first catalyst component has a pore volume from 2.1 $cm^3/g$ to 2.9 $cm^3/g$ with a major portion of the pore volume being provided by pores having diameters of 30 nm to 60 nm (300 Å to 600 Å).

**Patentansprüche**

**1.** Katalysatorzusammensetzung, gekennzeichnet durch einen ersten und einen zweiten wärmeaktivierten, Siliciumdioxidgetragenen Katalysatorbestandteil, wobei die Katalysatorbestandteile in einem Gewichtsverhältnis von 3:1 bis 1:3 anwesend sind und 0,5 bis 1,25 Gew.-% Chrom enthalten, wobei einer der Katalysatorbestandteile auch 0,5 bis 6 Gew.-% Aluminium enthält, die Siliciumdioxidträger des ersten und zweiten Katalysatorbestandteils in bezug auf die Porenvolumina sich um mindestens 0,3 $cm^3/g$ unterscheiden, wobei der Siliciumdioxidträger des ersten Katalysatorbestandteils ein Porenvolumen von größer als 2,0 $cm^3/g$ aufweist und der Silciumdioxidträger des zweiten Katalysatorbestandteils ein Porenvolumen von 1,5 bis 1,9 $cm^3/g$ aufweist, und die Wärmeaktivierung bei einer Temperatur, die niedriger ist als die Zersetzungstemperatur der Siliciumdioxidträger, in einer nichtreduzierenden Atmosphäre durchgeführt wird.

**2.** Katalysatorzusammensetzung nach Anspruch 1, wobei ein metallisches oder nichtmetallisches Reduktionsmittel mit dem ersten und zweiten Katalysatorbestandteil verwendet wird, und das Molverhältnis des metallischen oder nichtmetallischen Reduktionsmittels zu Chrom von 0,01:1 bis 2:1 reicht.

**3.** Katalysatorzusammensetzung nach Anspruch 2, wobei das metallische oder nichtmetallische Reduktionsmittel Trialkylaluminiumverbindungen, Alkylaluminiumhalogenide, Alkylaluminiumalkoxide, Dialkylzinkverbindungen, Dialkylmagnesiumverbindungen, Alkalimetallborhydride, Aluminiumborhydride, Alkylborane und Borhydride ist.

**4.** Katalysatorzusammensetzung nach Anspruch 2 oder 3, wobei der Unterschied der Porenvolumina des Siliciumdioxids des ersten und zweiten Katalysatorbestandteils von 0,3 bis 1,2 $cm^3/g$ reicht.

**5.** Katalysatorzusammensetzung nach einem der Ansprüche 2 bis 4, wobei der erste und zweite Katalysatorbestandteil in einem Gewichtsverhältnis von 2:1 bis 1:2 anwesend sind, das Reduktionsmittel Trialkylboran ist, und das Molverhältnis von Bor zu Chrom von 0,1:1 bis 1,5:1 reicht.

**6.** Katalysatorzusammensetzung nach einem der Ansprüche 1 bis 5, wobei der erste Katalysatorbestandteil 0,5 bis 1,2 Gew.-% Chrom und 2 bis 4,5 Gew.-% Aluminium auf dem Siliciumdioxidträger enthält, und der größte Teil des Porenvolumens des Siliciumdioxidträgers des ersten Katalysatorbestandteils von Poren mit Durchmessern von 30 nm bis 60 nm (300 Å bis 600 Å) bereitgestellt wird.

**7.** Katalysatorzusammensetzung nach Anspruch 6, wobei der erste Katalysatorbestandteil durch Abscheidung einer Organophosphorylchromverbindung und Aluminiumalkoxidverbindung auf einem Siliciumdioxidträger mit einem Porenvolumen von 2,1 $cm^3/g$ bis 2,9 $cm^3/g$ erhalten wird.

**8.** Katalysatorzusammensetzung nach Anspruch 7, wobei der Siliciumdioxidträger des ersten Katalysatorbestandteils bei einer Temperatur von 649 ° C (1200 ° F) bis 927 ° C (1700 ° F) vor der Abscheidung der Chrom- und Aluminiumverbindungen calciniert wird.

**9.** Katalysatorzusammensetzung nach Anspruch 7, wobei die Organophosphorylchromverbindung das Reaktionsprodukt von Chromtrioxid und Triethylphosphat ist, und die Aluminiumalkoxidverbindung Aluminium-sec-butoxid ist.

**10.** Katalysatorzusammensetzung nach einem der Ansprüche 7 bis 9, wobei der zweite Katalysatorbestandteil 0,75 bis 1,25 Gew.-% Chrom auf dem mikrosphäroidalen Silciumdioxidträger enthält.

**11.** Katalysatorzusammensetzung nach Anspruch 10, wobei der zweite Katalysatorbestandteil durch Abscheidung von Chromacetat auf einem mikrosphäroidalen Siliciumdioxidträger mit einem Porenvolumen von 1,6 $cm^3/g$ bis 1,8 $cm^3/g$ erhalten wird.

**12.** Katalysatorzusammensetzung nach einem der Ansprüche 1 bis 11, wobei der erste und zweite Katalysatorbestandteil getrennt durch Erwärmen in einer nichtreduzierenden Atmosphäre bei einer Temperatur von 510 °C (950 °F) bis 899 °C (1650 °F) für einen Zeitraum von 2 bis 12 h aktiviert werden.

**13.** Katalysatorzusammensetzung nach einem der Ansprüche 1 bis 11, wobei der erste und zweite Katalysatorbestandteil kombiniert werden und durch Erwärmen eines Gemisches der Katalysatorbestandteile in einer nichtreduzierenden Atmosphäre bei einer Temperatur von 510 °C (950 °F) bis 816 °C (1500 °F) für einen Zeitraum von 2 bis 12 h co-aktiviert werden.

**14.** Katalysatorzusammensetzung nach einem der Ansprüche 5 bis 13, wobei das Trialkylboran Triethylboran ist, das mit dem ersten und zweiten Katalysatorbestandteil verwendet wird.

**15.** Katalysatorzusamemnsetzung nach einem der Ansprüche 7 bis 14, wobei der Siliciumdioxidträger des ersten Katalysatorbestandteils ein Porenvolumen von 2,1 $cm^3/g$ bis 2,9 $cm^3/g$ aufweist, wobei der größte Teil des Porenvolumens durch Poren mit einem Durchmesser von 30 nm bis 60 nm (300 Å bis 600 Å) bereitgestellt wird.

## Revendications

**1.** Composition de catalyseur , caractérisée par un premier et deuxième composants catalyseurs supportés par de la silice activée à la chaleur, ces composants catalyseurs étant présents selon une proportion pondérale de 3:1 à 1:3 et contenant de 0,5 à 1,25 % en poids de chrome, l'un des composants catalyseurs contenant également de 0,5 à 6 % en poids d'aluminium, les supports de silice du premier et du deuxième composants catalyseurs ayant des volumes de pores qui diffèrent l'un de l'autre d'au moins 0,3 $cm^3/g$, le support de silice du premier composant catalyseur ayant un volume de pores supérieur à 2,0 $cm^3/g$ et le support de silice du deuxième composant catalyseur ayant un volume de pores de 1,5 à 1,9 $cm^3/g$, l'activation à la chaleur étant mise en oeuvre à une température inférieure à la température de décomposition des supports de silice dans une atmosphère non réductrice.

**2.** Composition de catalyseur selon la revendication 1, dans laquelle on utilise un réducteur métallique ou non métallique avec le premier et le deuxième composants catalyseurs, le rapport en modes du métal ou du non métal du réducteur au chrome étant de 0,01:1 à 2:1.

**3.** Composition de catalyseur selon la revendication 2, dans laquelle le réducteur métallique ou non métallique comprend les trialkylaluminiums, les halogénures de trialkylaluminium, les alkylates d'alkylaluminium, les dialkylzincs, les dialkyl magnésiums, les borohydrures de métaux alcalins, les borohydrures d'aluminium, les alkylboranes ou les hydrures de bore.

**4.** Composition de catalyseur selon la revendication 2 ou 3, dans laquelle la différence entre le premier et le deuxième composants catalyseurs, en ce qui concerne le volume de pores de la silice, est de 0,3 à 1,2 $cm^3/g$.

**5.** Composition de catalyseur selon l'une quelconque des revendications 2 à 4, dans laquelle le premier et le deuxième composants catalyseurs sont présents selon un rapport pondéral de 2:1 à 1:2, le réducteur est un trialkylborane et le rapport en moles du bore au chrome est de 0,1:1 à 1,5:1.

**6.** Composition de catalyseur selon l'une quelconque des revendications 1 à 5, dans laquelle le premier composant catalyseur contient de 0,5 à 1,2 % en poids de chrome et de 2 à 4,5 % d'aluminium sur un support de silice, la plus grande partie du volume de pores du support de silice du premier composant

catalyseur étant assurée par des pores ayant un diamètre de 30 à 60 nm (300 à 600 angströms).

**7.** Composition de catalyseur selon la revendication 6, dans laquelle on obtient le premier composant catalyseur en déposant, sur un support de silice ayant un volume de pores de 2,1 à 2,9 $cm^3/g$, un composé organophosphorylé du chrome et un alkylate d'aluminium.

**8.** Composition de catalyseur selon la revendication 7, dans laquelle le support de silice du premier composant catalyseur est calciné à une température comprise entre 649° C (1200° F) et 927° C (1700 °C) avant déposition des composés du chrome et de l'aluminium.

**9.** Composition de catalyseur selon la revendication 7, dans laquelle le composé organophosphorylé du chrome est le produit de la réaction du trioxyde de chrome et du phosphate de triéthyle, l'alkylate d'aluminium étant le sec-butylate d'aluminium.

**10.** Composition de catalyseur selon l'une quelconque des revendications 7 à 9, dans laquelle le deuxième composant catalyseur contient de 0,75 à 1,25 % en poids de chrome sur le support de silice microsphéroïdal.

**11.** Composition de catalyseur selon la revendication 10, dans laquelle le deuxième composant catalyseur est obtenu par déposition d'acétate de chrome sur un support de silice microsphéroïdal ayant un volume de pores de 1,6 à 1,8 $cm^3/g$.

**12.** Composition de catalyseur selon l'une quelconque des revendications 1 à 11, dans laquelle le premier et le deuxième composants catalyseurs subissent séparément une activation à la chaleur, par chauffage pendant 2 à 12 heures, dans une atmosphère non réductrice, à une température comprise entre 510 °C (950 °F) et 899 °C (1650 °F).

**13.** Composition de catalyseur selon l'une quelconque des revendications 1 à 11, dans laquelle le premier et le second composants catalyseurs sont combinés et coactivés par chauffage d'un mélange des composants catalyseurs pendant 2 à 12 heures, dans une atmosphère non réductrice, à une température comprise entre 510 °C (950 °F) et 816 °C (1500 °F).

**14.** Composition de catalyseur selon l'une quelconque des revendications 5 à 13, dans laquelle le trialkylborane est le triéthylborane utilisé avec le premier et le deuxième composants catalyseurs.

**15.** Composition de catalyseur selon l'une quelconque des revendications 7 à 14, dans laquelle le support de silice du premier composant catalyseur a un volume de pores de 2,1 à 2,9 $cm^3/g$, la plus grande partie du volume de pores étant assurée par des pores ayant un diamètre de 30 à 60 nm (300 à 600 angströms).